# EUROPEAN PATENT SPECIFICATION

(11) **EP 0 852 550 B1**
(45) Date of publication and mention of the grant of the patent: **12.12.2001**
(21) Application number: 96931832.8
(22) Date of filing: 27.09.1996
(51) Int. Cl.: B62D 65/00, B60J 5/00

(54) **METHOD AND ARRANGEMENT FOR MOUNTING A DOOR ON AN AUTOMOTIVE BODY**
VERFAHREN UND ANLAGE ZUR MONTAGE EINER TÜR AN EINEM FAHRZEUGKÖRPER
PROCEDE DE MONTAGE DE PORTIERE SUR UNE CARROSSERIE D'AUTOMOBILE CORPS ET DISPOSITIF CORRESPONDANT

(30) Priority: 29.09.1995 FI 954663
(43) Date of publication of application: 15.07.1998
(73) Proprietor: Oy Tamware AB, 33710 Tampere (FI)
(72) Inventor: RAHIKKALA, Teuvo, FIN-33720 Tampere (FI)
(74) Representative: Kuosmanen, Timo
(86) International application number: FI9600512
(87) International publication number: WO9712801

(56) References cited:
- DE-A- 3 532 104
- FR-A- 2 642 013
- US-A- 3 594 036
- PATENT ABSTRACTS OF JAPAN, No. 10, M-1068; & JP,A,02 262 422 (MAZDA MOTOR CORP), 25 October 1990.

## Description

The invention relates to a method for mounting a door on a vehicle body, in which method the door with its drive mechanism is attached to a door opening provided in the vehicle body and before the door is mounted on the body of the vehicle, it is fastened with its drive mechanism to a separate mounting rack to be substantially ready for use and the door is mounted on the vehicle body with the mounting rack by attaching it to the body only by means of the mounting rack.

The invention also relates to an arrangement for mounting a door on a vehicle body, the arrangement comprising at least one door leaf, at least one door pillar for opening and closing the door leaf, and a drive mechanism for turning the door pillar, the arrangement comprises also a separate mounting rack to which the door leaves, the door pillars and the drive mechanism are fastened before the door is mounted on the vehicle body.

At present, doors are generally mounted on the body of buses or other large vehicles in such a way that the door is brought to the site of installation in several separate units each of which is separately mounted and attached to the body and adjusted with respect to each other to provide an effective opening door. Such a construction requires that the body is provided with different fasteners, guides etc for the door structures, these elements also comprising for example appropriate openings of suitable size. Therefore it is rather difficult and time-consuming to install a door, and mounting faults produce a poorly operating door structure. Such doors also give rise to complaints to the door manufacturer and to the producer of the body, which in turn creates both expenses and a bad reputation. Such a manner of installation is also very expensive since it takes several hours of effective working time to mount one door. Further, such a manner of mounting a door also requires a great deal of expert knowledge from the mechanic and therefore also better training than usual.

US-A-3594036 discloses a door which before it is mounted on the body of the vehicle, it is together with its drive mechanism fastened with its fittings to a separate mounting rack to be ready for use.

The purpose of the present invention is to provide such a method and an arrangement for mounting a door which avoid the drawbacks of the prior arrangements and by means of which a door can be mounted rapidly and in a simple manner. The method according to the invention is characterized in that for the purpose of installing a door, the mounting rack is provided with a separate reinforcement that is removed after the door has been mounted on the body.

The arrangement according to the invention is characterized in that it comprises a separate reinforcement that is attached to the mounting rack for mounting a door that can be removed when the door of the mounting rack has been installed in the body of the vehicle.

The essential idea of the invention is that a door is mounted in place as a finished unit in such a way that both the actual doors and the drive mechanism of the doors, the door pillars etc have been fastened together already in the factory manufacturing the doors and they have been supported with a separate temporary supporting structure into the appropriate position and adjusted correctly as a finished door unit that is mounted in place in an opening provided in the body and fastened thereto without any further modifications. The invention has the advantage that when the door is formed already in the door factory into a finished integral unit which can be placed in the correct shape and position into an empty door opening without separate brackets or the like, a great deal of working time and also costs will be saved. When a door is assembled already in the factory, it can be placed correctly in advance and adjusted appropriately so that after the door has been mounted and electricity and compressed air have been connected, the door operates in the right way. This in turn results in a decreased number of complaints concerning the doors. Also, no fasteners or brackets are needed for installing a door, wherefore the construction of a body becomes simpler and the costs will decrease. Also, the installer is not required to be specially trained for adjusting the doors, since the adjustments have already been performed in the factory. When a door is fastened merely by putting a sealing material between the door frame and the body and by screwing the door frame to the body from predetermined points, the installation can be easily carried out with the usual technical skills of a mechanic. Also, the fastening of doors will be of better quality and the final result will be neater than with the conventional manner.

The invention will be described in greater detail in the accompanying drawings, in which
Figure 1 shows schematically a conventional door structure with the associated units,
Figure 2 shows schematically a mounting rack suitable for implementing the arrangement according to the invention, and support structures for the rack,
Figure 3 shows schematically an installation opening required in an automotive body for installing the mounting rack of Figure 2,
Figure 4 shows schematically the door of Figure 1 as mounted on the mounting rack,
Figures 5a and 5b show schematically the mounting of a door on an automotive body, and
Figure 6 shows schematically a detail of the fastening of the mounting rack to the installation opening provided in the automotive body.

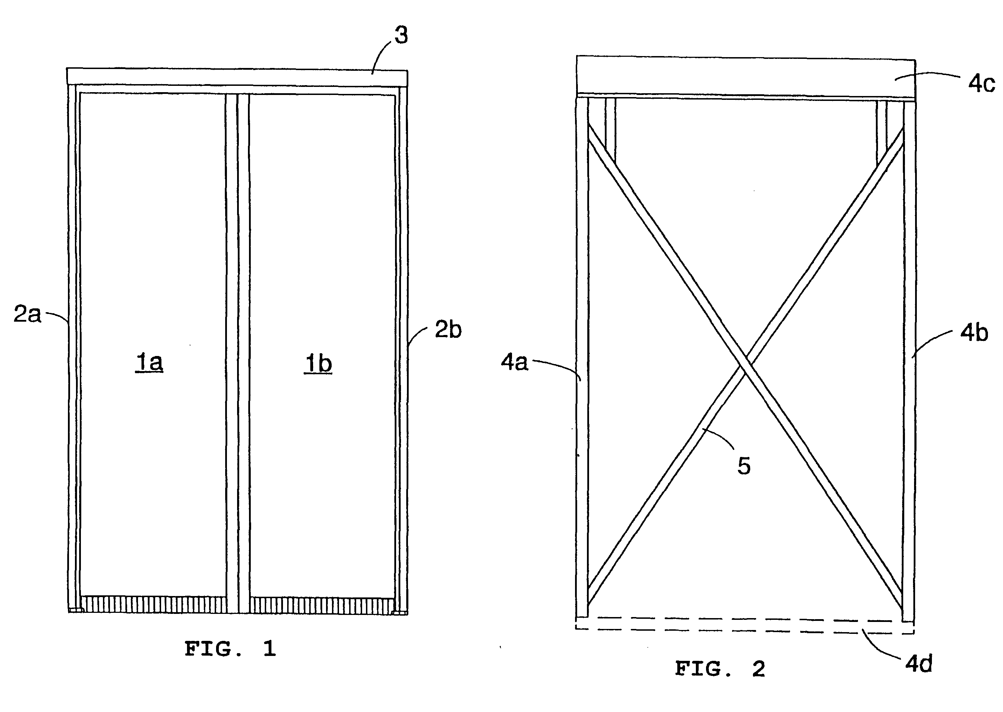

Figure 1 shows schematically an arrangement according to the invention comprising door leaves 1a and 1b, which are connected to door pillars 2a and 2b and above which there is a drive mechanism 3 for the doors.

The drive mechanism 3 may be any door-turning mechanism that is currently used and known per se and that is connected to turn the door pillars 2a, 2b in such a way that the door leaves 1a and 1b open and close in the desired manner. The door leaves 1a and 1b may be provided with different edge seals, anti-closing structures etc, which are generally known per se, however, and which do not have to be described in greater detail in this connection.

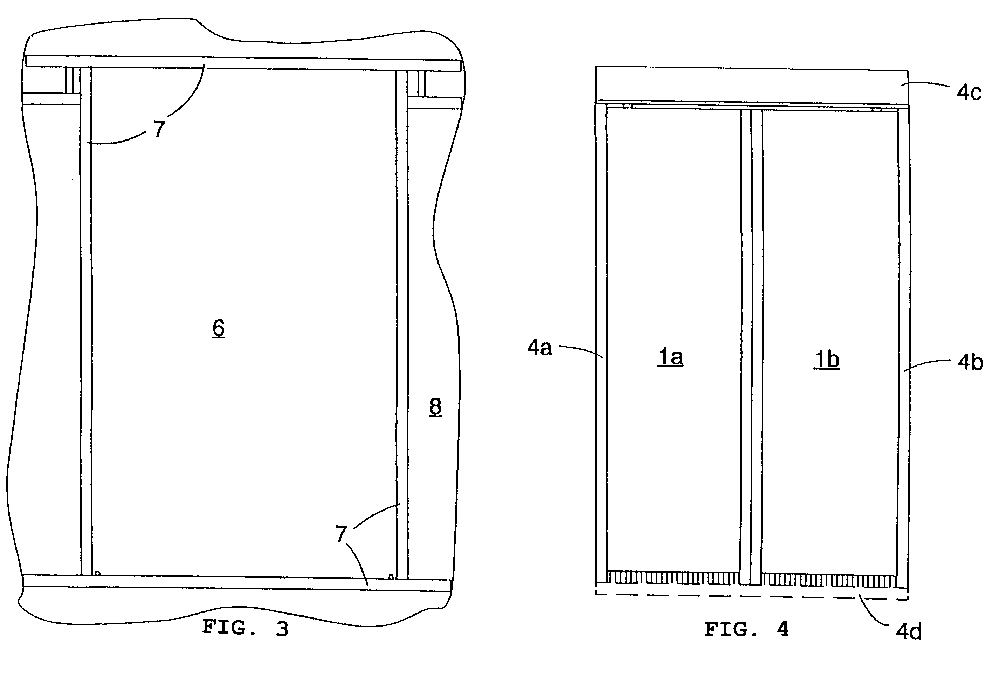

Figure 2 also shows schematically a door mounting rack 4 to which a door is fastened during the assembly. The mounting rack 4 comprises vertical frame parts 4a and 4b that are positioned on the sides of the door, and above these parts there is an upper frame part 4c. These frame parts are interconnected in such a way that they form an integral mounting rack 4. Further, below the vertical frame parts 4a and 4b there may be a horizontal frame part 4d that connects the lower ends of the frame parts 4a and 4b together. The upper frame part 4c has such a shape that the drive mechanism can be connected directly thereto. It is most preferably an aluminum alloy profile that has been extruded in such a way that it already comprises also the outer surface of the upper edge of the door, the required water troughs and the guide grooves required for moving the door. In this way this element is also made sufficiently rigid and strong in a simple and easy manner. Correspondingly, the vertical frame parts 4a and 4b are made most preferably of an aluminum alloy profile, so that it is possible to form the required grooves and outer surface therein in connection with the extrusion. The mounting rack also comprises a reinforcement 5 that is temporarily required in the interior of the rack during the assembly and transportation of the door and the fastening of the door to the body, the reinforcement supporting the mounting rack 4 into a predetermined shape and position. When the mounting rack 4 has been assembled and fastened to a separate assembly jig, it is possible to fasten the door leaves 1a and 1b, the door pillars 2a and 2b, and the drive mechanism 3 thereto. When this is carried out in the factory manufacturing the doors, the door can be assembled and adjusted so that it is ready for use immediately after it has been fastened to the body and the necessary power sources, such as electricity and compressed air, have been connected thereto. When the door has been fastened to the mounting rack and the rack has been adjusted to the correct position, the reinforcement 5 is fastened thereto, whereafter the entire structure can be transported as such to the factory producing automotive bodies. The automotive body in turn comprises an opening 6, for example such as shown in Figure 3, for the door. The edges of the opening 6 comprise support profiles 7 that form a solid frame for the opening 6. When the door is being installed, it is positioned into the opening 6 with the mounting rack 4 and the reinforcement 5.

Figure 4 shows a door structure installed in a mounting rack so that it forms an integral arrangement that can be delivered as such in one unit to the factory producing automotive bodies and mounted in place there.

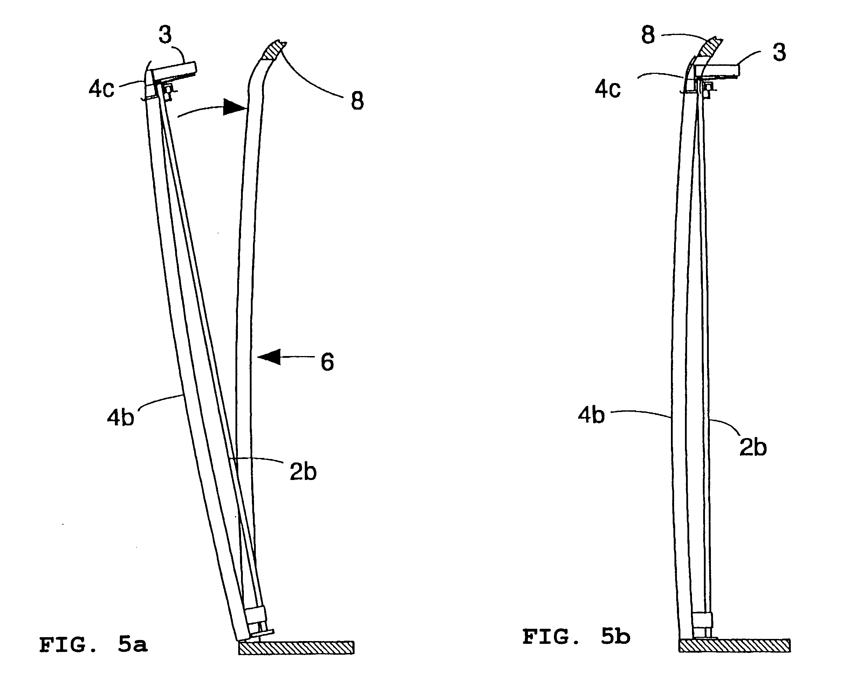

Figure 5a is a schematic side view of the installation of the arrangement according to the invention in a car. When installing a door, in the simplest manner it is lifted onto the lower edge of the opening 6 provided in the body 8 so that it rests on the lower edge, and a sealing material is spread on the opposite surfaces of the frame parts 4a to 4c and possibly the lower part 4d and the opening 6 of the body either before or after the arrangement is lifted, whereafter the door arrangement is pushed to the body 8 and fastened thereto with a few screws, if necessary. Since the frame parts 4a to 4d of the mounting rack 4 are already provided with edging strips that cover the edges of the opening in the body, the door arrangement can be fastened to the body rapidly by gluing with a suitable sealing material. In such a case, the purpose of the screws is to mostly ensure that the door stays in place while the adhesive dries, even though the screws also support the door later during the use of the vehicle. The reinforcement 5 may be a girder-like or frame-like structure that is composed of separate either tube-like or bar-like parts and that keeps the mounting rack 4 rigid in the direction of the surface of the door leaves. Further, the reinforcement 5 can be disassembled and assembled so that it is easy to return to the door manufacturer after the installation of the door. The reinforcement 5 may also be sheet-like, honeycombed or some other type of structure that reinforces the mounting rack in the desired manner. In order to facilitate the installation of the door, guide pins can be fastened to the lower part of the vehicle body or guide holes may be formed therein, and the lower edge of the door frame is correspondingly provided with guide holes or pins so that the door can be easily mounted in place from the lower end. On the other hand, if the door is mounted for example by using a manipulator or a robot, such guides are not normally needed since the manipulator or robot can be programmed to set the door in the exact place. In such cases, the mounting rack can be fastened to the body either with a fast-drying adhesive or with retention screws that keep the door in place by means of the rack until the adhesive is fixed. After the door has been mounted in place, the lower ends of the door pillars and the lower guide of the door leaves are attached, if necessary, to the floor of the body if the mounting rack does not comprise an actual lower frame part. The lower ends of the door pillars can also be attached to the mounting rack, so it is not necessary to separately attach them to the body in any stage. In such a situation the entire floor space situated behind the door opening remains free and is easy to keep clean. The last procedure is the removal of the reinforcement 5, whereafter the necessary power sources, such as electricity, compressed air or the like, are connected to the drive mechanism of the door.

Figure 5b shows how the door arrangement is pushed into place in the opening provided in the body 8 and how it is positioned appropriately in the body 8.

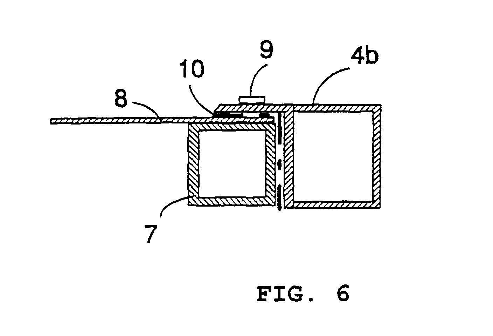

Figure 6 is a schematic cross-sectional view of a possible manner of fastening, showing how the other vertical frame part 4b of the mounting rack comprises a flange that acts as the edging strip and that presses against the outer surface of the body 8. The frame part 4b as well as the rest of the mounting rack are attached to the body 8 with screws 9, and between the frame part and the body there is a sealing material 10.

The invention is described above in the specification and in the drawings only by way of example and it is not restricted thereto in any way. The essential feature is that when a door is mounted, the elements of the door are fastened in advance to the mounting rack so that they from the door arrangement. It is also essential that the body is provided with an opening that corresponds to the shape of the mounting rack so that the door arrangement can be pushed into the opening and fastened merely by means of the mounting rack without a need for separate attachment brackets or the like. Another essential idea is that during the installation and transportation of the door, a separate reinforcement is used and it is attached to the mounting rack in such a way that the door keeps its shape and adjustment until it has been fastened to the body and the reinforcement can be removed. In the figures the mounting rack is shown with a rectangular shape, but it may deviate from that shape and be for example diagonal in some direction or wider than the rest of the mounting rack in some part, depending on the door mechanism used and the other conditions.

## Claims

1. A method for mounting a door on a vehicle body, in which method the door with its drive mechanism is attached to a door opening provided in the vehicle body and before the door is mounted on the body (8) of the vehicle, it is fastened with its drive mechanism to a separate mounting rack (4) to be substantially ready for use and the door is mounted on the vehicle body with the mounting rack by attaching it to the body only by means of the mounting rack, **characterized in that** for the purpose of installing a door, the mounting rack (4) is provided with a separate reinforcement (5) that is removed after the door has been mounted on the body.

2. A method according to claim 1, **characterized in that** the frame parts (4a - 4d) of the mounting rack (4) are formed such that they also comprise covering strips for the edges of the opening provided in the vehicle body (8), and that the mounting rack (4) is attached to the vehicle body (8) by means of a fastening material, such as an adhesive, spread between the mounting rack and the body.

3. An arrangement for mounting a door on a vehicle body, the arrangement comprising at least one door leaf (1a, 1b), at least one door pillar (2a, 2b) for opening and closing the door leaf (1a, 1b), and a drive mechanism (3) for turning the door pillar, the arrangement comprises also a separate mounting rack (4) to which the door leaves (1a, 1b), the door pillars (2a, 2b) and the drive mechanism (3) are fastened before the door is mounted on the vehicle body, **characterized in that** it comprises a separate reinforcement (5) that is attached to the mounting rack (4) for mounting a door and that can be removed when the door of the mounting rack (4) has been installed in the body (8) of the vehicle.

4. An arrangement according to claim 3, **characterized in that** the mounting rack (4) is comprised of at least three frame parts (4a - 4c) that also form covering strips between the door and the edges of the door opening provided in the vehicle body.

5. An arrangement according to claim 4, **characterized in that** the frame parts (4a - 4d) of the mounting rack (4) are formed of an aluminum alloy profile, and that they comprise the required grooves for movement and guiding.

## Patentansprüche

1. Verfahren zur Montage einer Tür an einem Fahrzeugkörper, wobei die Tür mit ihrem Antriebsmechanismus an einer in dem Fahrzeugkörper vorgesehenen Türöffnung befestigt wird, und wobei die Tür vor der Montage an dem Fahrzeugkörper (8) mit ihrem Antriebsmechanismus an einem getrennten Montagegestell (4) befestigt wird, damit sie im wesentlichen gebrauchsfertig ist, und mit dem Montagegestell an dem Fahrzeugkörper dadurch montiert wird, daß sie nur mittels des Montagegestells an dem Fahrzeugkörper befestigt wird,
**dadurch gekennzeichnet, daß**
zum Zweck des Installierens einer Tür das Montagegestell mit einem getrennten Verstärkungsteil (5) versehen ist, das nach der Montage der Tür an dem Fahrzeugkörper entfernt wird.

2. Verfahren nach Anspruch 1, **dadurch gekennzeichnet, daß** die Rahmenteile (4a N 4d) des Montagegestells (4) so ausgebildet sind, daß sie auch Abdeckstreifen für die Kanten der in dem Fahrzeugkörper (8) vorgesehenen Öffnung aufweisen, und daß das Montagegestell (4) mit dem Fahrzeugkörper (8) mittels eines zwischen dem Montagegestell und dem Fahrzeugkörper aufgebrachten Befestigungsmaterials, z.B. eines Klebers, verbunden wird.

3. Anlage zur Montage einer Tür an einem Fahrzeugkörper, mit wenigstens einem Türblatt (1a, 1b), wenigstens einem Türpfosten (2a, 2b) zum Öffnen und Schließen des Türblatts (1a, 1b), und einem Antriebsmechanismus (3) zum Drehen des Türpfostens, des weiteren mit einem getrennten Montagegestell (4), an dem die Türblätter (1a, 1b), die Türpfosten (2a, 2b) und der Antriebsmechanismus (3) vor der Montage der Tür an dem Fahrzeugkörper befestigt werden,
**dadurch gekennzeichnet, daß**
das Montagegestell ein getrenntes Verstärkungsteil (5) aufweist, das an dem Montagegestell (4) zur Montage einer Tür befestigt wird, und das entfernt werden kann, wenn die Tür mit dem Montagegestell (4) an dem Fahrzeugkörper (8) installiert worden ist.

4. Anlage nach Anspruch 3, **dadurch gekennzeichnet, daß** das Montagegestell (4) aus wenigstens drei Rahmenteilen (4a N 4c) besteht, die auch Abdeckstreifen zwischen der Tür und den Kanten der in dem Fahrzeugkörper vorgesehenen Türöffnung bilden.

5. Anlage nach Anspruch 4, **dadurch gekennzeichnet, daß** die Rahmenteile (4a N 4d) des Montagegestells (4) aus einem Aluminiumlegierungsprofil gebildet sind, und daß sie die für Bewegung und Führung erforderlichen Ausnehmungen aufweisen.

## Revendications

1. Procédé de montage d'une portière sur une carrosserie de véhicule, dans lequel la portière avec son mécanisme d'entraînement est fixée à une ouverture de portière prévue dans la carrosserie de véhicule, et avant d'être montée sur la carrosserie (8) du véhicule, la portière est fixée avec son mécanisme d'entraînement sur un chevalet de montage séparé (4) pour être pratiquement prête à l'emploi et la portière est montée sur la carrosserie de véhicule avec le chevalet de montage en la fixant à la carrosserie seulement au moyen du chevalet de montage, **caractérisé en ce que**, pour mettre en place une portière, le chevalet de montage (4) est doté d'un renfort séparé (5) qui est retiré après le montage de la portière sur la carrosserie.

2. Procédé selon la revendication 1, **caractérisé en ce que** les éléments structurels (4a à 4d) du chevalet de montage (4) sont formés de telle sorte qu'ils comprennent également des bandes de recouvrement pour les bords de l'ouverture prévue dans la carrosserie de véhicule (8), et **en ce que** le chevalet de montage (4) est fixé à la carrosserie (8) au moyen d'un matériau de fixation, tel qu'un adhésif, étalé entre le chevalet de montage et la carrosserie.

3. Arrangement pour le montage d'une portière sur une carrosserie de véhicule, l'arrangement comprenant au moins un battant de portière (1a, 1b), au moins un montant de portière (2a, 2b) pour ouvrir et fermer le battant de portière (1a, 1b), et un mécanisme d'entraînement (3) pour faire tourner le montant de portière, l'arrangement comprenant également un chevalet de montage séparé (4) auquel les battants de portière (1a, 1b), les montants de portière (2a, 2b) et le mécanisme d'entraînement (3) sont fixés avant le montage de la portière sur la carrosserie de-véhicule, **caractérisé en ce qu'**il comprend un renfort séparé (5) qui est fixé au chevalet de montage (4) pour le montage d'une portière et qui peut être retiré lorsque la portière du chevalet de montage (4) a été mise en place sur la carrosserie (8) du véhicule.

4. Arrangement selon la revendication 3, **caractérisé en ce que** le chevalet de montage (4) est constitué d'au moins trois éléments structurels (4a à 4c) qui forment également des bandes de recouvrement entre la portière et les bords de l'ouverture de portière prévue dans la carrosserie de véhicule.

5. Arrangement selon la revendication 4, **caractérisé en ce que** les éléments structurels (4a à 4d) du chevalet de montage (4) sont formés d'un profilé en alliage d'aluminium, et **en ce qu'**ils comprennent les gorges requises pour le mouvement et le guidage.
